# EUROPÄISCHE PATENTSCHRIFT

(11) **EP 3 313 690 B1**
(45) Veröffentlichungstag und Bekanntmachung des Hinweises auf die Patenterteilung: **24.04.2019**
(21) Anmeldenummer: 16726607.1
(22) Anmeldetag: 03.06.2016
(51) Int. Cl.: B60N 2/90, B60N 2/16, B60N 2/18, B60N 2/02, B60N 2/22, B60N 2/235, G05G 5/08

(54) **SITZVERSTELLER**
SEAT ADJUSTER
DISPOSITIF DE RÉGLAGE DE SIÈGE

(30) Priorität: 24.06.2015 DE 202015103313 U
(43) Veröffentlichungstag der Anmeldung: 02.05.2018
(73) Patentinhaber: Schwarzbich, Jörg, 33615 Bielefeld (DE)
(72) Erfinder: Schwarzbich, Jörg, 33615 Bielefeld (DE)
(74) Vertreter: Ter Meer Steinmeister & Partner
(86) Internationale Anmeldenummer: PCT/EP2016/062628
(87) Internationale Veröffentlichungsnummer: WO 2016/206951

(56) Entgegenhaltungen:
- EP-A1- 2 840 275
- WO-A1-2014/057091

## Beschreibung

Die Erfindung betrifft einen Sitzversteller mit einer zwischen einem festen Teil und einem verstellbaren Teil wirkenden Bremse, mit der der verstellbare Teil in unterschiedlichen Positionen an dem feststehenden Teil blockierbar ist und die mittels eine Freischaltelements freischaltbar ist, mit einem auf das Freischaltelement wirkenden Verstellorgan zum wahlweisen Verstellen des verstellbaren Teils in zwei entgegengesetzten Richtungen, und mit einem Verriegelungsorgan, das bei unbetätigtem Verstellorgan selbsttätig einrastet und den verstellbaren Teil formschlüssig an dem festen Teil verriegelt und das bei Betätigung des Verstellorgans selbsttätig ausrastet, wobei durch Bewegen des Verstellorgans aus einer Neutralstellung heraus in eine der beiden Richtungen das Ausrasten des Verriegelungsorgans und das Verstellen des verstellbaren Teils bewirkbar ist und das Verriegelungsorgan ein Zahnsegment für den Eingriff in einen mit dem verstellbaren Teil gekoppelten Zahnkranz aufweist und zwischen einer Verriegelungsstellung, in der es in den Zahnkranz eingreift, und einer Freigabestellung beweglich ist, in der es von dem Zahnkranz abgerückt ist.

In EP 0 979 179 B2 wird ein Sitzversteller beschrieben, der beispielsweise zur Neigungsverstellung der Rückenlehne oder zur Höhenverstellung eines Kraftfahrzeugsitzes dient. Der feste Teil ist starr am Fahrzeugsitz oder an der Karosserie montiert, während der verstellbare Teil die gewünschte Verstellung des Fahrzeugsitzes bewirkt. Das Verstellorgan weist einen Hebel auf, der sich in entgegengesetzte Richtungen aus der Neutralstellung heraus verschwenken lässt, um den Sitz entweder in der einen Richtung oder in der anderen Richtung zu verstellen. Durch mehrmaliges "Pumpen" mit dem Verstellorgan ist dabei eine schrittweise Verstellung des Fahrzeugsitzes über einen größeren Verstellweg möglich. Wenn das Verstellorgan in der gewünschten Verstellrichtung aus der Neutralstellung ausgelenkt wird, so wird durch die Bremse der verstellbare Teil mit genommen. Wenn der Benutzer das Verstellorgan loslässt, wird der verstellbare Teil durch die Bremse in der erreichten Position blockiert, während das Verstellorgan unter der Wirkung einer Rückstellfeder in die Neutralstellung zurückkehrt, so das dann bei Bedarf ein weiterer Verstellhub ausgeführt werden kann.

Bei der Bremse handelt es sich vorzugsweise um eine sogenannte Freilaufbremse (siehe auch EP 2 840 275 A1), bei der das Blockieren des verstellbaren Teils an dem festen Teil durch Klemmrollen und zugehörige Klemmkonturen bewirkt wird. Das hat den Vorteil, dass eine quasi stufenlose Verstellung ermöglicht wird und - anders als beispielsweise bei einem Ratschenmechanismus - kaum störende Verstellgeräusche entstehen. Wenn jedoch der verstellbare Teil über einen längeren Zeitraum einem dauerhaft wirkenden Drehmoment ausgesetzt ist, bei einem Sitzhöhenversteller beispielsweise aufgrund des Eigengewichts des Kraftfahrzeugsitzes oder des Gewichts der darauf sitzenden Person, so kann es infolge von Erschütterungen während der Fahrt zu einem allmählichen Ablaufen der Klemmrollen an den Laufflächen der Bremse und damit zu einer unerwünschten allmählichen Verstellung des Fahrzeugsitzes kommen. Dieser Effekt wird bei dem bekannten Sitzversteller dadurch vermieden, dass der verstellbare Teil mit Hilfe des Verriegelungselements zusätzlich formschlüssig an dem festen Teil verriegelt wird.

Bei dem bekannten Sitzversteller wird das Verriegelungselement durch schwenkbare Klinken gebildet, die in der Verriegelungsstellung in einen starr mit dem verstellbaren Teil gekoppelten Zahnkranz eingreifen und zu Beginn eines Verstellvorgangs aus der Verriegelungsstellung herausgeschwenkt werden. Aufgrund dieser Bauweise kann das Verriegelungselement nur einem begrenzten Drehmoment standhalten.

Sitzversteller für Kraftfahrzeuge müssen aus Sicherheitsgründen so beschaffen sein, dass sie den Sitz auch dann sicher in der eingestellten Position halten, wenn in einer Unfallsituation aufgrund der bei einem Aufprall auftretenden Trägheitskräfte ein extrem hohes Drehmoment auf den Sitzversteller wirkt. Bei dem bekannten Sitzversteller ist deshalb die Freilaufbremse so ausgelegt, dass sie den verstellbaren Teil auch bei einem sehr hohen Drehmoment sicher an dem festen Teil blockiert.

Ein Sitzversteller nach dem Oberbegriff des Anspruchs 1 ist aus WO 2014/057091 A1 bekannt.

Aufgabe der Erfindung ist es, einen Sitzversteller der oben genannten Art zu schaffen, der kompakter gestaltet ist und sich kostengünstiger herstellen lässt.

Diese Aufgabe wird erfindungsgemäß dadurch gelöst, dass das Verriegelungsorgan derart an dem festen Teil geführt ist, dass es in radialer Richtung des Zahnkranzes zwischen der Verriegelungsstellung und der Freigabestellung verschiebbar ist, dass die Bremse eine Klemmrollen-Freilaufbremse ist, deren Freischaltelement den Zahnkranz bildet und mit dem verstellbaren Teil derart in Eingriff steht, dass eine relative Verdrehung des Freischaltelements und des verstellbaren Teils nur innerhalb eines begrenzten Spiels möglich ist, und dass dem Verstellorgan ein radial beweglicher Schieber zugeordnet ist, der ein weiteres Zahnsegment für den Eingriff in den Zahnkranz aufweist.

Erfindungsgemäß ist somit das Verriegelungselement so an dem festen Teil geführt, dass es eine lineare Translationsbewegung ausführt, durch die das Zahnsegment mit dem Zahnkranz in und außer Eingriff gebracht wird. Das Zahnsegment kann sich dabei über einen relativ großen Umfangswinkel des Zahnkranzes erstrecken, so dass ein hohes Drehmoment auf das Zahnsegment übertragen werden kann. Die dabei auf das Verriegelungsorgan übertragenen Kräfte wirken quer zur Verstellrichtung und können durch die Linearführung unmittelbar in den festen Teil abgeleitet werden. Auf diese Weise kann die erforderliche Crashsicherheit durch die mechanische Verriegelung erreicht werden, so dass die beispielsweise mit Klemmrollen arbeitende Bremse den verstellbaren Teil nur vorübergehend, nämlich während der Rückstellbewegung des Verstellorgans in die Neutralstellung, zu halten braucht. Die Bremse braucht deshalb nur für ein wesentlich kleineres Drehmoment ausgelegt zu werden, was eine kleinbauende Gestaltung sowie die Verwendung kostengünstiger Materialien und/oder eine Verringerung der Anzahl der Klemmrollen ermöglicht. Auf diese Weise werden die Herstellungskosten reduziert und zugleich wird eine kompaktere Bauweise des Sitzverstellers ermöglicht.

Der Zahnkranz ist an dem Freischaltelement ausgebildet, das nur innerhalb eines sehr begrenzten Winkelbereiches relativ zu dem verstellbaren Teil bewegbar ist. Durch die formschlüssige Verriegelung des Freischaltelements wird somit auch eine formschlüssige Verriegelung des verstellbaren Teils erreicht.

Der Zahnkranz an dem Freischaltelement wird zugleich dazu benutzt, eine lösbare Kupplung zwischen dem Freischaltelement und dem Verstellorgan zu schaffen, nämlich über ein weiteres Zahnsegment, das nur bei der Bewegung des Verstellorgans aus der Neutralstellung heraus in den Zahnkranz eingreift, während es bei der Rückstellbewegung des Verstellorgans von dem Zahnkranz gelöst ist, so dass das Verstellorgan leichtgängig und geräuscharm in die Neutralstellung zurückkehren kann.

Vorteilhafte Ausgestaltungen und Weiterbildungen der Erfindung sind in den Unteransprüchen angegeben.

Im folgenden wird ein Ausführungsbeispiel anhand der Zeichnung näher erläutert.

Es zeigen:
- Fig. 1: eine Explosionsdarstellung eines Sitzverstellers, bei dem die einzelnen Komponenten jeweils in einem axialen Schnitt dargestellt sind;
- Fig. 2: einen Querschnitt einer Klemmrollen-Freilaufbremse in dem Sitzversteller nach Fig. 1;
- Fig. 3: die Komponenten der Klemmrollen-Freilaufbremse in einem axialen Schnitt und im zusammengebauten Zustand;
- Fig. 4: einen Grundriss eines Verriegelungsorgans und einer Grundplatte sowie einen Schnitt durch einen Teil eines Verstellorgans in einer Neutralstellung;
- Fig. 5: eine Darstellung entsprechend Fig. 4, mit aus der Neutralstellung heraus geschwenktem Verstellorgan;
- Fig. 6 und 7: vergrößerte Detaildarstellungen eines Zahneingriffs zwischen dem Verriegelungsorgan und einem Zahnkranz;
- Fig. 8: einen axialen Schnitt durch Teile des Sitzverstellers in zusammengebautem Zustand;
- Fig.9: eine teilweise aufgeschnittene Grundrissdarstellung eines Rückstellhebels und eines Schiebers zusammen mit einem Teil des Verstellorgans;
- Fig. 10 und 11: Darstellungen analog zu Fig. 8 und 9 bei aus der Neutralstellung heraus bewegtem Verstellorgan;
- Fig. 12: den Rückstellhebel, den Schieber und einen Deckel des Sitzverstellers in einer Ansicht von unten; und
- Fig. 13: das Verstellorgan und den Deckel in einer Ansicht von unten.

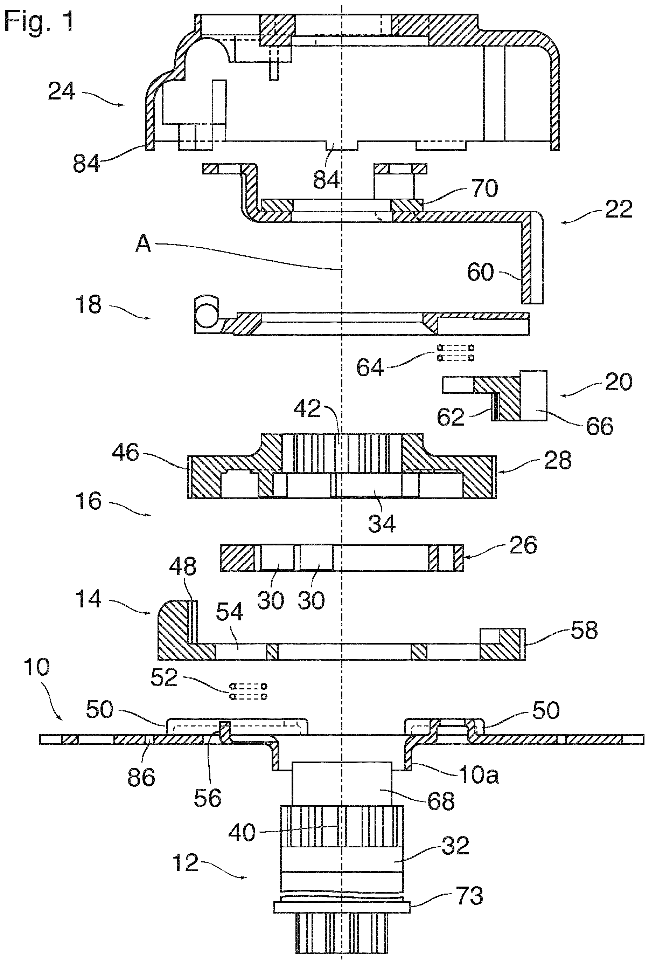

Der in Fig. 1 gezeigte Sitzversteller weist als festen Teil eine Grundplatte 10 aus gestanztem Blech und als verstellbaren Teil ein Ritzel 12 auf, das um eine Achse A drehbar ist. Weitere Hauptkomponenten des Sitzverstellers sind ein Verriegelungsorgan 14 aus Kunststoff, eine Bremse 16, ein Rückstellhebel 18 mit einem Schieber 20, ein Verstellorgan 22, und ein Deckel 24, der zusammen mit der Grundplatte 10 ein im wesentlichen geschlossenes Gehäuse bildet, das die übrigen Komponenten aufnimmt.

Bei der Bremse 16 handelt es sich um eine Klemmrollen-Freilaufbremse mit einem Außenring 26 aus Metall, einem Freischaltelement 28 aus Kunststoff und drei Paaren von Klemmrollen 30, die an der inneren Umfangsfläche des Außenrings 26 anliegen. Eine innere Laufbahn 32 für die Klemmrollen 30 wird durch die äußere Umfangsfläche eines Abschnitts des Ritzels 12 gebildet.

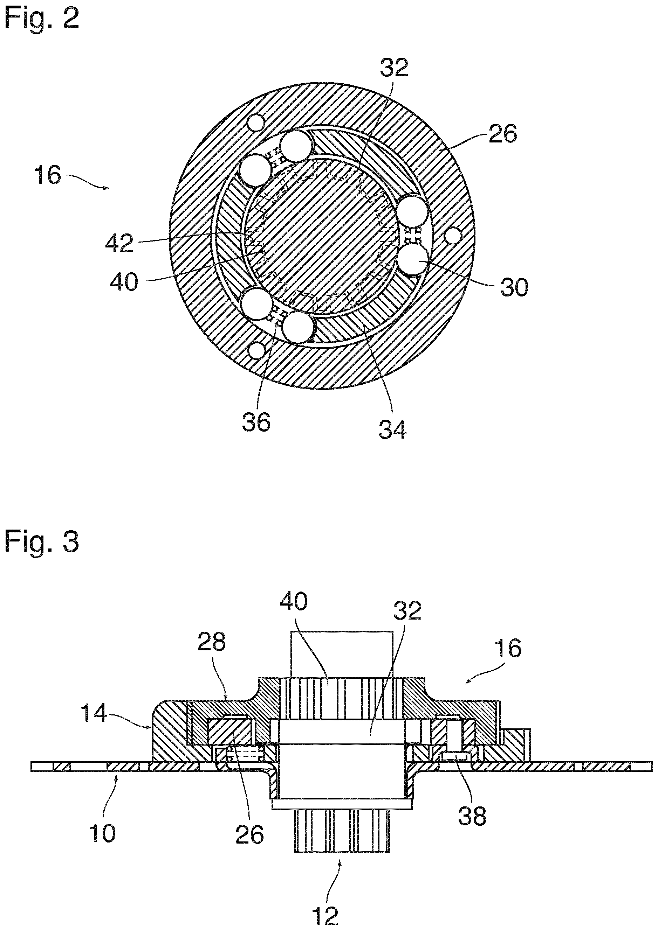

Wie Fig. 2 zeigt, bilden die innere Laufbahn 32 und die innere Umfangsfläche des Außenrings 26 einen Spalt, der die Klemmrollen 30 aufnimmt. Das Löseelement 28 bildet drei Klauen 34, die jeweils im Zwischenraum zwischen den Paaren der Klemmrollen 30 in diesen Spalt eingreifen. Zwischen den Klemmrollen 30 jedes Paares sind elastische Elemente 36 angeordnet, die diese Klemmrollen auseinander drücken .

Die innere Laufbahn 32 ist nicht perfekt zylindrisch, sondern bildet eine Klemmkontur, die so gestaltet ist, dass der Spalt für die Klemmrollen jeweils von der Klemmrolle aus in Richtung auf die angrenzende Klaue 34 enger wird.

Wie Fig. 3 zeigt, ist der Außenring 26 durch Bolzen 38 drehfest auf der Grundplatte 10 gehalten. Ein an die innere Laufbahn 32 angrenzender Abschnitt des Ritzels 12 ist in einer Bohrung des Freischaltelements 28 aufgenommen und weist auf dem Umfang verteilte Nuten 40 auf. An der Innenfläche der Bohrung des Freischaltelements 28 sind vorspringende Rippen 42 gebildet, die mit Spiel in die Nuten 40 eingreifen, so dass das Ritzel 12 relativ zu dem Freischaltelement 28 um einen kleinen Winkel verdrehbar ist.

Wenn auf das Ritzel 12 in einer der beiden Drehrichtungen ein Drehmoment wirkt, so hat das Ritzel folglich die Tendenz, sich relativ zu dem Freischaltelement 28 zu drehen, wobei die Klemmrollen 30 am Außenring entlang gleiten. Dabei tritt jedoch jeweils eine der Klemmrollen 30 jedes Paares tiefer in den enger werdenden Teil des Spaltes ein und bewirkt eine Klemmung zwischen dem Außenring 26 und der Laufbahn 32, wodurch das Ritzel 12 relativ zu dem drehfesten Außenring 26 blockiert wird.

Wenn dagegen das Freischaltelement 28 gedreht wird, so drücken die Klauen 34 jeweils eine der angrenzenden Klemmrollen 30 gegen das elastische Element 36, das elastisch nachgibt, wodurch diese Klemmrolle in den weiter werdenden Teil des Spaltes gedrückt und so an einem Blockieren gehindert wird. Gleichzeitig bewirken die in die Nuten 40 eingreifenden Rippen 42 eine Mitnahme des Ritzels 12, so dass das Freischaltelement 28 und das Ritzel 12 gemeinsam gedreht werden. Sobald das Freischaltelement 28 wieder drehmomentfrei ist, werden die Klemmrollen 30 durch die elastischen Elemente 36 wieder in die klemmende Position gedrückt, und das Ritzel 12 wird in der dann erreichten Position erneut blockiert.

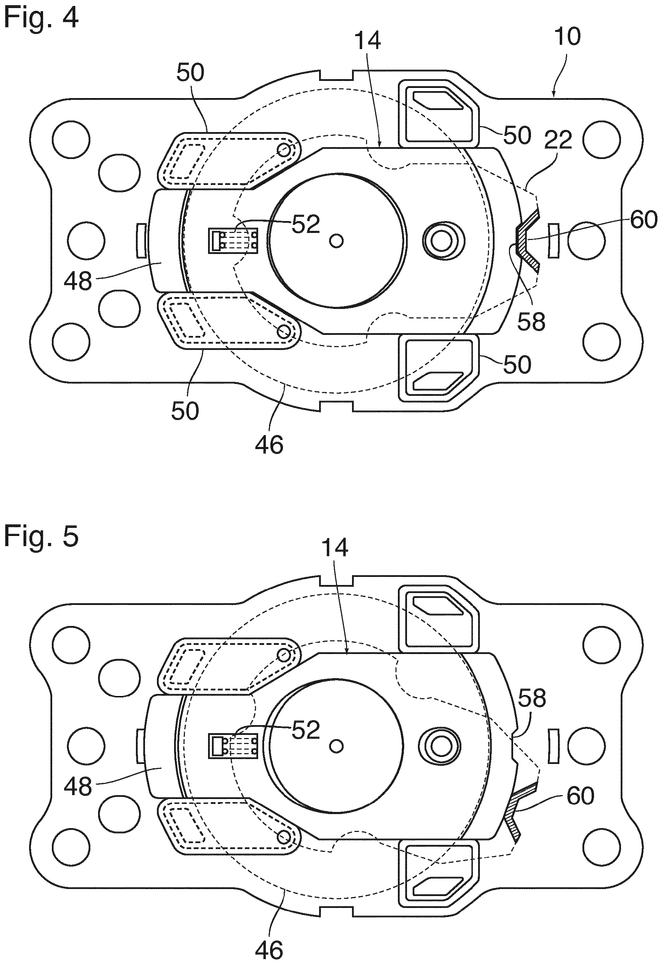

Wie Fig. 1 zeigt, hat das Freischaltelement 28 in einem den Außenring 26 übergreifenden Teil auf seinem gesamten äußeren Umfang einen Zahnkranz 46. Das Verriegelungsorgan 14 weist ein Zahnsegment 48 auf, das mit einem Umfangsabschnitt des Zahnkranzes 46 in Eingriff gebracht werden kann. Insgesamt hat das Verriegelungsorgan 14 die Form einer flachen Platte, die verschiebbar zwischen Vorsprüngen 50 der Grundplatte 10 geführt ist. Wie Fig. 4 zeigt, ist diese Führung praktisch spielfrei, und die aus der Grundplatte 10 herausgedrückten Vorsprünge 50 sind so gestaltet, dass in der zur Verschieberichtung senkrechten Richtung ein stabiler Formschluss zwischen der Grundplatte 10 und dem Verriegelungsorgan 14 besteht.

Eine Feder 52 ist in einer Aussparung 54 des Verriegelungsorgans 14 aufgenommen und stützt sich einerseits an einer Wand dieser Aussparung 54 und andererseits an einem aus der Grundplatte 10 herausgebogenen Lappen 56 ab, so dass das Verriegelungsorgan 14 nach rechts in Fig. 1 und 4 in eine Position vorgespannt wird, in der das Zahnsegment 48 mit dem Zahnkranz 46 in Eingriff ist.

Am in Fig. 1 und 4 rechten Ende bildet der Rand des Verriegelungsorgans 14 eine im Grundriss trapezförmige Kerbe 58. Das Verstellorgan 22 weist am in Fig. 1 rechten Ende einen nach unten vorspringenden Nocken 60 auf, der einen zu der Kerbe 58 komplementären trapezförmigen Grundriss hat und in einer in Fig. 4 gezeigten Neutralstellung in diese Kerbe eingreift. Wenn das Verstellorgan 22 jedoch aus der Neutralstellung heraus verschwenkt wird, beispielsweise in die in Fig. 5 gezeigte Position, so gleitet der Nocken 60 auf eine Flanke der Kerbe 58 auf und bewirkt so eine Verschiebung des Verriegelungsorgans 14 nach links unter Überwindung der Kraft der Feder 52, so dass das Zahnsegment 48 den Zahnkranz 46 freigibt. Der beiderseits an die Kerbe 58 angrenzende Rand des Verriegelungsorgans 14 verläuft auf einem Kreisbogen, der auf die Achse A zentriert ist, die zugleich die Drehachse des Verstellorgans 22 bildet. Folglich hält der Nocken 60, sobald er die Kerbe 58 verlassen hat, das Verriegelungsorgan 14 in der Position, in der das Zahnsegment 48 vom Zahnkranz 46 abgerückt ist.

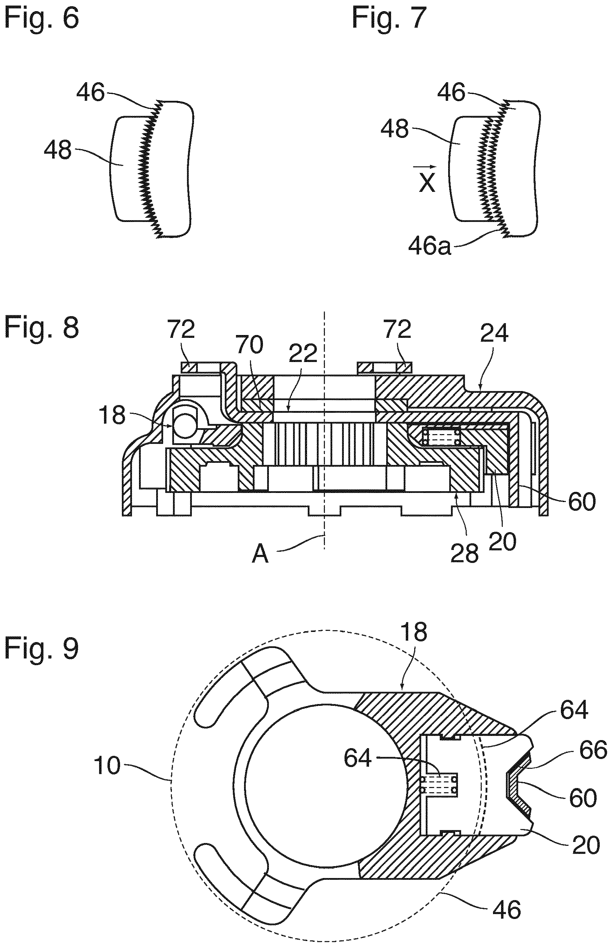

In Fig. 6 ist das Zahnsegment 48 in der Position gezeigt, in der es mit dem Zahnkranz 46 in Eingriff steht. Fig. 7 zeigt das Zahnsegment 48 in der vom Zahnkranz 46 abgerückten Position. Damit das Zahnsegment 48 mit dem Zahnkranz 46 in und außer Eingriff gebracht werden kann, dürfen die Zähne 46a des Zahnkranzes 46 in der Verschieberichtung X des Verriegelungsorgans gesehen keine Hinterschneidung bilden. Im gezeigten Beispiel ist diese Bedingung erfüllt, da die Zahnflanken der Zähne 46a an den in Fig. 7 oberen und unteren Rändern des Zahnsegments 48 parallel zur Verschieberichtung verlaufen. Je flacher die Zahnflanken der Zähne 46a sind, desto größer ist der Umfangswinkelbereich des Zahnkranzes 46, über den sich das Zahnsegment 48 erstrecken kann, ohne dass die oben genannte Bedingung verletzt wird. Allerdings sollten die Zahnflanken jedenfalls so steil sein, dass Selbsthemmung zwischen den Zähnen des Zahnkranzes 46 und des Zahnsegments 48 besteht, so dass das Zahnsegment nicht aus der Eingriffsposition herausgedrückt wird, wenn ein Drehmoment auf den Zahnkranz 46 wirkt.

Wie Fig. 1 zeigt, weist auch der an dem Rückstellhebel 18 geführte Schieber 20 ein Zahnsegment 62 auf, das mit dem Zahnkranz 46 des Freischaltorgans 28 in Eingriff gebracht werden kann. Eine Feder 64 stützt sich an dem Rückstellhebel 18 ab und spannt den Schieber 20 in eine Position vor, in der das Zahnsegment 62 vom Zahnkranz 46 abgerückt ist. Am äußeren Ende, rechts in Fig. 1, hat der Schieber 20 eine im Grundriss trapezförmige Kerbe 66, die ebenfalls zu dem Nocken 60 komplementär ist, jedoch eine größere Tiefe hat als die Kerbe 58 des Verriegelungsorgans 14.

Fig. 8 zeigt das Freischaltelement 28, den Rückstellhebel 18 mit dem Schieber 20, das Verstellorgan 22 und den Deckel 24 im zusammengebauten Zustand. Der Schieber 20 ist hier in der Stellung gezeigt, in der sein Zahnsegment den Zahnkranz des Freischaltelements 28 freigibt und der Nocken 60 des Betätigungsorgans 22 passend in der Kerbe 66 des Schiebers liegt.

Das Verstellorgan 22 ist drehbar auf einem zylindrischen Fortsatz 68 des Ritzels 12 (Fig. 1) gelagert, der auch in einen zwischen dem Verstellorgan 22 und dem Deckel 24 angeordneten Lagerring 70 eingreift. Drei in Winkelabständen von 120° angeordnete Befestigungsarme 72 des Verstellorgans 22 durchgreifen kreisbogenförmige Schlitze in der oberen Wand des Deckels 24 und ermöglichen so die Befestigung eines nicht gezeigten Betätigungshebels außerhalb des Deckels 24.

Fig. 9 zeigt teilweise im Schnitt und teilweise im Grundriss den Rückstellhebel 18 und den Schieber 20 sowie - im Querschnitt - den Nocken 60 und illustriert den gleichen Zustand wie Fig. 8. Der Rückstellhebel 18 ist drehbar auf einer an dem Freischaltelement 28 gebildeten Nabe gelagert und unabhängig von dem Verstellorgan 22 um die Achse A drehbar.

Der Lagerring 70 ist im Presssitz auf dem Fortsatz 68 des Ritzels 12 gehalten und hat eine leicht konische Gestalt, so dass er nach Art einer Tellerfeder auf das Betätigungsorgan 22 drückt und zugleich einen Bund 73 des Ritzels 12 gegen den unteren Rand eines Durchzug 10a der Grundplatte 10 zieht (Fig. 1). Dadurch werden die von dem Ritzel durchsetzten Bauteile zusammengehalten, und zugleich wird, wie Fig. 8 zeigt, dass Betätigungsorgan 22 gegen die obere Stirnfläche des Freischaltelements 28 gespannt.

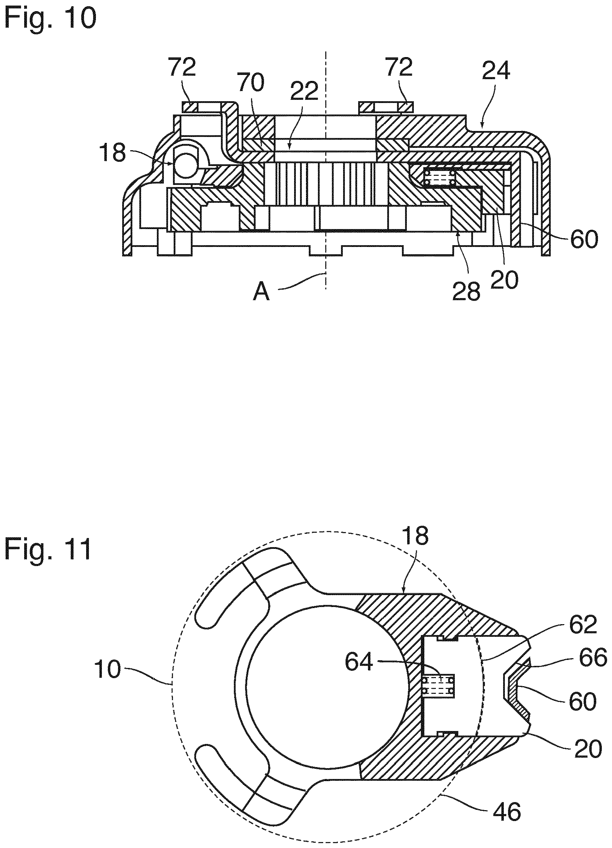

Wenn das Verstellorgan 22 aus der in Fig. 8 und 9 gezeigten Neutralstellung heraus gedreht wird, so übt es durch Reibschluss ein Drehmoment auf das Freischaltelement aus, und gleichzeitig gleitet der Nocken 60 auf eine Flanke der Kerbe 66 des Schiebers 20 auf, wodurch der Schieber 20 entgegen der Kraft der Feder 64 einwärts in die in Fig. 10 und 11 gezeigte Position verschoben wird. Das Zahnsegment 62 des Schiebers ist dann mit dem Zahnkranz 46 in Eingriff. Bei fortgesetzter Drehung des Verstellorgans 22 wird durch den Nocken 60 die Einheit aus Schieber 20 und Rückstellhebel 18 mitgenommen, und die Drehbewegung wird über das Zahnsegment 62 und den Zahnkranz 46 auf das Freischaltorgan 28 übertragen.

Die Kerben 66 und 58 des Schiebers 20 und des Verriegelungsorgans 14 sind so dimensioniert, dass, wenn das Verstellorgan 22 mit dem Nocken 60 aus der Neutralstellung heraus bewegt wird und dadurch der Zahneingriff zwischen dem Zahnsegment 64 und dem Zahnkranz 46 und somit die Antriebsverbindung zum Freischaltelement 28 hergestellt wird, gleichzeitig auch das Verriegelungsorgan 14 in die Entriegelungsstellung verschoben wird. Die Bewegungsphase, in der die Zähne des Zahnsegments 62 mit den Zähnen des Zahnkranzes 46 in Eingriff gelangen, kann dabei zeitlich überlappen oder zusammenfallen mit der Phase, in der die Zähne des Zahnsegments 48 des Verriegelungsorgans 14 sich von dem Zahnkranz 46 lösen. Das Freischaltelement 28 bewirkt dann im weiteren Verlauf der Schwenkbewegung des Verstellorgans 22 das Lösen der Bremse 16 und das Verstellen des Ritzels 12.

Die Federkraft der Feder 52 für das Rückstellorgan 14 ist vorzugsweise so dimensioniert, dass der Benutzer schon in der Anfangsphase der Schwenkbewegung, wenn der Nocken 60 das Verriegelungsorgan 14 entriegelt, einen ähnlich hohen Widerstand spürt wie danach bei dem eigentlichen Verstellvorgang.

Durch die oben beschriebene Gestaltung wird ereicht, dass der Benutzer praktisch keinen Leerhub oder toten Gang spürt, wenn er das Verstellorgan 22 aus der Neutralstellung heraus bewegt und die Verstellbewegung des Ritzels einleitet.

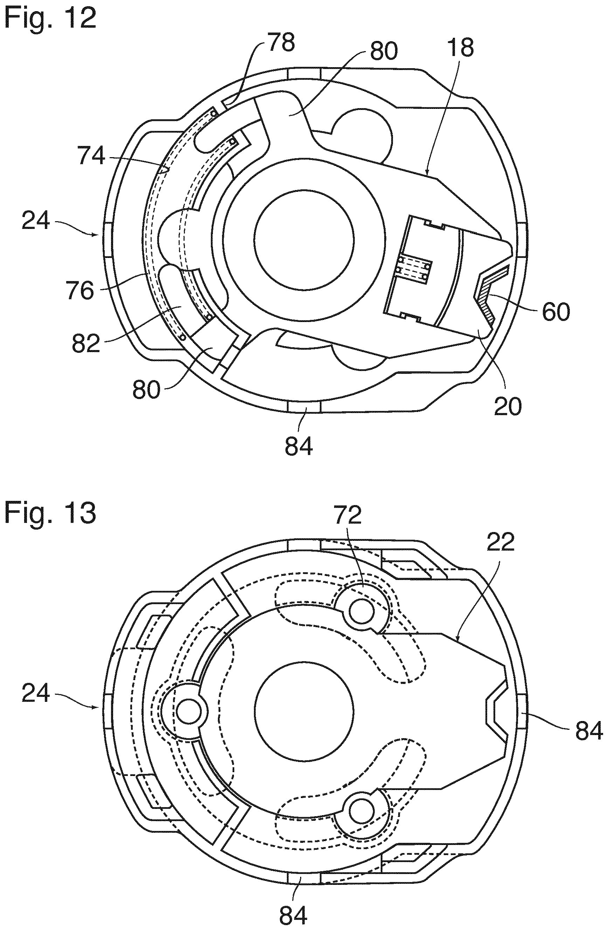

Fig. 12 zeigt den Nocken 60, den Schieber 20 und den Rückstellhebel 18 in der verschwenkten Position. Weiterhin zeigt Fig. 12 den Deckel 24 in einer Ansicht von unten, und man erkennt einen in diesem Deckel gebildeten Federtunnel 74, der kreisbogenförmig um die Achse A verläuft und eine entsprechend verlaufende Feder 76 (Schraubendruckfeder) aufnimmt. Der Deckel 24 bildet radiale Wände 78, die den Federtunnel 74 an den Enden auf einem Teil seines Querschnitts begrenzen.

Auch der Rückstellhebel 18 bildet zwei radial vorspringende Widerlager 80 für die Feder 76. Jedes dieser Widerlager trägt einen gebogenen Zapfen 82, der in das betreffende Ende der Feder 76 eingreift. Wenn sich der Rückstellhebel 18 in der Neutralstellung befindet, sind die Widerlager 80 mit den radialen Wänden 78 des Deckels bündig, so dass jeweils eine der Wände 78 und eines der Widerlager 80 das betreffende Ende der Feder 76 gemeinsam abstützen. Wenn jedoch der Rückstellhebel 18 in der in Fig. 12 gezeigten Weise verschwenkt wird, so stützt sich ein Ende der Feder (das obere Ende in Fig. 12) an der Wand 78 des Deckels ab, während sich das andere Ende an dem Widerlager 80 des Rückstellhebels abstützt, so dass die Feder 76 komprimiert wird.

Wenn nun der Betätigungshebel losgelassen wird und somit das Verstellorgan 22 drehmomentfrei wird, so bewirkt die Kraft der Feder 64, dass der Schieber 20 wieder ausgefahren wird und somit der Zahneingriff zwischen dem Zahnsegment 62 und dem Zahnkranz 46 gelöst wird. Das Verstellorgan 22 wird dabei geringfügig gegenüber dem Rückstellhebel 18 verschwenkt, bis der Nocken 60 wieder mittig in der Kerbe 66 liegt. Der Rückstellhebel 18 ist nun der Kraft der Feder 76 ausgesetzt und wird deshalb gemeinsam mit dem Schieber 20 in die Neutralstellung geschwenkt, wodurch auch das Verstellorgan 22 in die Neutralstellung zurückgeführt wird, während das Ritzel 12 durch die Bremse 16 in der erreichen Position gehalten wird.

Sobald das Verstellorgan 22 in die Neutralstellung zurückgekehrt ist, kann der Nocken 60 wieder in der Kerbe 58 des Verriegelungsorgans aufgenommen werden und die Feder 52 bewirkt die selbsttätige Rückstellung des Verriegelungsorgans 14 in die verriegelte Position. Aufgrund der dreieckigen Form der Zähne 46a gibt es praktisch keine Position, in der Zahn auf Zahn steht und die Wiederherstellung des Zahneingriffs blockiert würde. Spätestens wird jedoch der Zahneingriff dann hergestellt, wenn es aufgrund leichter Erschütterungen oder aufgrund eines Ablaufens der Klemmrollen zu einer geringfügigen Verdrehung zwischen dem Freischaltelement 28 und dem Verriegelungsorgan 14 kommt.

Wenn die Neutralstellung erreicht ist - oder wahlweise auch schon früher - kann das Ritzel 12 durch erneutes Verschwenken des Verstellorgans 22 ein weiteres Stück in der gewünschten Richtung verdreht werden.

Fig. 13 zeigt das Verstellorgan 22 und den Deckel 24 in einer Ansicht von unten. Strichpunktiert sind hier auch die verdeckten Konturen des Deckels 24 gezeigt, die in der oberen Wand des Deckels die Ausnehmungen begrenzen, die die Drehbewegung der Befestigungsarme 72 sowie das Hindurchführen dieser Befestigungsarme durch die obere Wand des Deckels bei der Montage ermöglichen. Am unteren Rand seiner Umfangswand weist der Deckel Vorsprünge 84 auf, die in entsprechende Einstecköffnungen 86 der Grundplatte 10 (Fig. 1) eingreifen. Nicht näher gezeigte Schraubdome und dergleichen ermöglichen es, den Deckel 24 und die Grundplatte 10 fest miteinander zu verbinden. Die Grundplatte 10 kann dann in einer geeigneten Position am Sitzgestell und einem Teil der Fahrzeugkarosserie befestigt werden, so dass das Ritzel 12 mit einem nicht gezeigten Eingangszahnrad oder einer Zahnstange eines Getriebes kämmt, mit dem der Fahrzeugsitz verstellt wird.

## Patentansprüche

1. Sitzversteller mit einer zwischen einem festen Teil (10) und einem verstellbaren Teil (12) wirkenden Bremse (16), mit der der verstellbare Teil in unterschiedlichen Positionen an dem feststehenden Teil blockierbar ist und die mittels eines Freischaltelements (28) freischaltbar ist, mit einem auf das Freischaltelement wirkenden Verstellorgan (22) zum wahlweisen Verstellen des verstellbaren Teils (12) in zwei entgegengesetzten Richtungen, und mit einem Verriegelungsorgan (14), das bei unbetätigtem Verstellorgan (22) selbsttätig einrastet und den verstellbaren Teil formschlüssig an dem festen Teil (10) verriegelt und das bei Betätigung des Verstellorgans selbsttätig ausrastet, wobei durch Bewegen des Verstellorgans aus einer Neutralstellung heraus in eine der beiden Richtungen das Ausrasten des Verriegelungsorgans und das Verstellen des verstellbaren Teils bewirkbar ist und das Verriegelungsorgan (14) ein Zahnsegment (48) für den Eingriff in einen mit dem verstellbaren Teil (12) gekoppelten Zahnkranz (46) aufweist undzwischen einer Verriegelungsstellung, in der es in den Zahnkranz eingreift, und einer Freigabestellung beweglich ist, in der es von dem Zahnkranz abgerückt ist, **dadurch gekennzeichnet, dass** das Verriegelungsorgan (14) derart an dem festen Teil (10) geführt ist, dass es in radialer Richtung des Zahnkranzes (46) zwischen der Verriegelungsstellung und der Freigabestellung verschiebbar ist, dass die Bremse (16) eine Klemmrollen-Freilaufbremse ist, deren Freischaltelement (28) den Zahnkranz (46) bildet und mit dem verstellbaren Teil (12) derart in Eingriff steht, dass eine relative Verdrehung des Freischaltelements (28) und des verstellbaren Teils (12) nur innerhalb eines begrenzten Spiels möglich ist und dass dem Verstellorgan (22) ein radial beweglicher Schieber (20) zugeordnet ist, der ein weiteres Zahnsegment (62) für den Eingriff in den Zahnkranz (46) aufweist.

2. Sitzversteller nach Anspruch 1, bei dem das Verstellorgan (22) und das Verriegelungsorgan (44) zueinander komplementäre Nocken (60) und Kerben (58) aufweisen, die eine Schwenkbewegung des Verstellorgans (22) aus der Neutralstellung heraus in eine Verschiebebewegung des Verriegelungsorgans (14) in die Freigabestellung umsetzen.

3. Sitzversteller nach Anspruch 1 oder 2, bei dem das Verriegelungsorgan (14) elastisch in die Verriegelungsstellung vorgespannt ist.

4. Sitzversteller nach einem der vorstehenden Ansprüche, bei dem das Verstellorgan (22) und der Schieber (20) über komplementäre Nocken (60) und Kerben (66) derart in Eingriff stehen, dass ein vom Verstellorgan (22) auf den Schieber übertragenes Drehmoment eine radiale Bewegung des Schiebers (20) zur Herstellung des Zahneingriffs mit dem Zahnkranz (46) bewirkt.

5. Sitzversteller nach Anspruch 4, bei dem der Schieber (20) an einen unabhängig von dem Verstellorgan (22) um dieselbe Drehachse (A) drehbaren Rückstellhebel (18) geführt ist, der elastisch in die Neutralstellung vorgespannt ist.

6. Sitzversteller nach einem der vorstehenden Ansprüche, bei dem das Verstellorgan (22) in Axialrichtung des Zahnkranzes (46) elastisch in eine Position vorgespannt ist, in der es reibschlüssig an dem Freischaltelement (28) anliegt.

## Claims

1. A seat adjuster, comprising a brake (16), which acts between a fixed part (10) and an adjustable part (12) and by means of which the adjustable part can be blocked in different positions on the fixed part and which can be released by means of a release element (28), an adjustment element (22), which acts on the release element, for selectively adjusting the adjustable part (12) in two opposite directions, and a locking element (14), which automatically engages and interlockingly locks the adjustable part to the fixed part (10) when the adjustment element (22) is not actuated and automatically disengages when the adjustment element is actuated, wherein the disengagement of the locking element and the adjustment of the adjustable part can be effected by moving the adjustment element out of a neutral position in one of the two directions, and the locking element (14) has a toothed segment (48) for meshing with a toothed ring (46) coupled to the adjustable part (12), the locking element being movable between a locking position, in which the locking element meshes with the toothed ring, and a release position, in which the locking element is moved away from the toothed ring, **characterized in that** the locking element (14) is guided on the fixed part (10) in such a way that it is slidable in the radial direction of the toothed ring (46) between the locking position and the release position, the brake (16) is a clamp roll type freewheel brake the release element (28) of which forms the toothed ring (46) and is in engagement with the adjustable part (12) such that a relative rotation of the release element (28) and the adjustable part (12) is possible only within a limited play, and the adjustment element (22) is provided with a radially movable slide (20) which has another toothed segment (62) for engagement with the toothed ring (46).

2. Seat adjuster according to claim 1, wherein the adjustment element (22) and the locking element (24) have complementary cams (60) and notches (58) which translate the rotary movement of the adjustment element (22) away from the neutral position into a displacement of the locking element (14) into the release position.

3. The seat adjuster according to claim 1 or 2, wherein the locking element (14) is elastically biased into the locked position.

4. The seat adjuster according to any of the preceding claims, wherein the adjustment element (22) and the slide (20) are in engagement with one another via complementary cams (60) and notches (66) such that a torque that is transferred from the adjustment element (22) onto the slide causes a radial movement of the slide (20) for establishing the engagement with the toothed ring (46).

5. The seat adjuster according to claim 4, wherein the slide (20) is guided on a release lever (18) that is rotatable independently of the adjustment element (22) about the same axis (A) of rotation and is elastically biased into the neutral position.

6. The seat adjuster according to any of the preceding claims, wherein the adjustment element (22) is elastically biased in axial direction of the toothed ring (76) into a position in which it is in frictional engagement with the release element (28).

## Revendications

1. Dispositif de réglage de siège comportant un frein (16) agissant entre une partie fixe (10) et une partie réglable (12), au moyen duquel la partie réglable peut être bloquée sur la partie fixe dans différentes positions et qui peut être débloquée au moyen d'un élément de déblocage (28), un organe de réglage (22) agissant sur l'élément de déblocage pour régler sélectivement la partie réglable (12) dans deux directions opposées, et un organe de blocage (14) qui s'enclenche automatiquement lorsque l'organe de réglage (22) n'est pas actionné et bloque la partie réglable sur la partie fixe (10) par complémentarité de formes, et qui se désenclenche automatiquement lorsque l'organe de réglage est actionné, dans lequel le désenclenchement de l'organe de blocage et le réglage de la partie réglable peuvent être activés en déplaçant l'organe de réglage à partir d'une position neutre dans l'une des deux directions, et l'organe de blocage (14) comporte un segment denté (48) pour venir en prise avec une couronne dentée (46) couplée à la partie réglable (12) et est mobile entre une position de verrouillage, dans laquelle il est en prise avec la couronne dentée, et une position de libération, dans laquelle il est écarté de la couronne dentée, **caractérisé en ce que** l'organe de blocage (14) est guidé sur la partie fixe (10) de sorte qu'il peut être déplacé dans une direction radiale de la couronne dentée (46) entre la position de verrouillage et la position de libération, **en ce que** le frein (16) est un frein à roue libre et à rouleau pinceur dont l'élément de déblocage (28) forme la couronne dentée (46) et qui est en prise avec la partie réglable (12) de telle sorte qu'une rotation relative de l'élément de déblocage (28) et de la partie réglable (12) n'est possible qu'avec un jeu limité, et **en ce qu'**un coulisseau radialement mobile (20) est associé à l'organe de réglage (22), lequel coulisseau comporte un segment denté supplémentaire (62) pour venir en prise avec la couronne dentée (46) .

2. Dispositif de réglage de siège selon la revendication 1, dans lequel l'organe de réglage (22) et l'organe de blocage (44) comportent des cames (60) et des entailles (58) complémentaires les unes des autres qui convertissent un mouvement de pivotement de l'organe de réglage (22) à partir de la position neutre en un mouvement de déplacement de l'organe de blocage (14) dans la position de libération.

3. Dispositif de réglage de siège selon la revendication 1 ou 2, dans lequel l'organe de blocage (14) est élastiquement précontraint dans la position de verrouillage.

4. Dispositif de réglage de siège selon l'une des revendications précédentes, dans lequel l'organe de réglage (22) et le coulisseau (20) sont en prise par l'intermédiaire de cames (60) et d'entailles (66) complémentaires, de telle sorte qu'un couple transmis par l'organe de réglage (22) au coulisseau entraîne un mouvement radial du coulisseau (20) pour établir un engrènement avec la couronne dentée (46).

5. Dispositif de réglage de siège selon la revendication 4, dans lequel le coulisseau (20) est guidé sur un levier de rappel (18) pouvant tourner indépendamment de l'organe de réglage (22) autour du même axe de rotation (A), lequel levier de rappel est élastiquement précontraint dans la position neutre.

6. Dispositif de réglage de siège selon l'une des revendications précédentes, dans lequel l'organe de réglage (22) est élastiquement précontraint dans une direction axiale de la couronne dentée (46) dans une position dans laquelle il est en contact de frottement avec l'élément de déblocage (28).
